# EUROPEAN PATENT APPLICATION

(11) **EP 4 506 398 A1**
(43) Date of publication of application: **12.02.2025**
(21) Application number: 23784562.3
(22) Date of filing: 28.02.2023
(51) Int. Cl.: C08J 9/02, C08G 18/00

(54) **BLOWING AGENT, FOAMING RESIN COMPOSITION, POLYUREA RESIN FOAM, AND PRODUCTION METHOD FOR POLYUREA RESIN FOAM**

(30) Priority: 06.04.2022 JP 2022063532
(71) Applicant: MITSUBISHI GAS CHEMICAL COMPANY, INC., Chiyoda-ku Tokyo 100-8324 (JP)
(72) Inventor: KAWASHIMA Yuki, Hiratsuka-shi, Kanagawa 254-0016 (JP); KOUNO Kazuki, Hiratsuka-shi, Kanagawa 254-0016 (JP)
(74) Representative: Gille Hrabal Partnerschaftsgesellschaft mbB Patentanwälte
(86) International application number: PCT/JP2023/007188
(87) International publication number: WO 2023/195269

(57) **Abstract**

A blowing agent for obtaining a polyurea resin foam including a polyurea having a repeating unit represented by the following general formula (I), the blowing agent including a reaction product (a2) of a cyclic amine compound (a1) and carbon dioxide. (In the formula I, R¹ is a divalent hydrocarbon group having a cyclic structure optionally having a substituent, and R² is a divalent hydrocarbon group optionally having a substituent.)

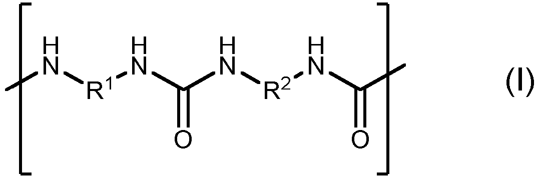

## Description

### Technical Field

The present invention relates to a blowing agent, a foamable resin composition, a polyurea resin foam, and a method for producing a polyurea resin foam.

### Background Art

Polyurea resins are resin compounds having a urea bond formed by a chemical reaction of a polyisocyanate and a polyamine, and are excellent in waterproof property, chemical resistance, abrasion resistance, heat resistance, anticorrosion property, fast drying property, environmental safety, and the like. Polyurea resins have been widely used for various fields, such as synthetic leathers, artificial leathers, adhesives, and paints.

In addition, it has been studied to impart functions such as thermal insulation property, sound insulation property, and lightweight property to polyurea resins by foaming the polyurea resins.

Examples of techniques relating to polyurea resin foams include those described in Patent Literatures 1 and 2.

Patent Literature 1 describes that a polyurea foam having an isocyanurate structure and having an isocyanurate ratio of 25 to 50% has excellent flame retardance and shape retention property during combustion, can suppress deterioration over time in a wet heat environment, is excellent in adhesion property to an adherend during coating, is hardly cracked even by flame contact, and hardly allows carbonization by the flame contact to proceed from the surface to a deep portion.

Patent Literature 2 describes that a composition comprising: an isocyanate component; an isocyanate reactive component; a catalyst selected from a foaming catalyst and/or a gelation catalyst and comprising N-(3-dimethylaminopropyl)-N,N-diisopropanolamine; and a specific amine component, and having a total amount of the amine components of 0.05% by weight to 0.50% by weight can produce a polyurea foam having been reduced in release of formaldehyde.

### Citation List

### Patent Literature

PTL1: JP 6925554 B
PTL2: JP 2019-206712 A

### Summary of Invention

### Technical Problem

Conventionally, to obtain a foam, a blowing agent is necessary, and to obtain higher foamability, large amount of the blowing agent need to be used and discarded. In contrast, a polyamine used as a starting material of a polyurea resin can absorb carbon dioxide, so that it is useful as a material that absorbs carbon dioxide to be discarded.

The present invention provides a novel method for producing a polyurea resin foam having improved foamability, which can reduce environmental impacts, a blowing agent and a foamable resin composition used for the method, and a polyurea resin foam having improved foamability.

### Solution to Problem

The present inventors have conducted intensive studies to solve the above problem. As a result, the present inventors have found that by using a reaction product of a cyclic amine compound and carbon dioxide as a blowing agent for obtaining a polyurea resin foam, the amount of use of a conventional environmentally harmful blowing agent can be reduced, and the environmental impacts during production of a polyurea resin foam can be reduced. Moreover, the present inventors have found that by using the reaction product as a blowing agent for obtaining a polyurea resin foam, foamability of the resulting polyurea resin foam can be improved. Thus, the present inventors have completed the present invention. Furthermore, the reaction product contributes to reduction of environmental impacts also because it can be produced while absorbing carbon dioxide from the environment.

Accordingly, the present invention provides the following blowing agent, foamable resin composition, polyurea resin foam, and method for producing a polyurea resin foam.
[1] A blowing agent for obtaining a polyurea resin foam comprising a polyurea having a repeating unit represented by the following general formula (I), comprising:
   a reaction product (a2) of a cyclic amine compound (a1) and carbon dioxide: 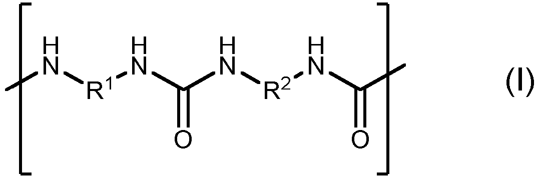 wherein R¹ is a divalent hydrocarbon group having a cyclic structure optionally having a substituent, and R² is a divalent hydrocarbon group optionally having a substituent.
[2] The blowing agent according to [1] above, wherein a percentage increase of a mass of the cyclic amine compound (a1) calculated by the following equation when the cyclic amine compound (a1) is left to stand in an air environment of 23°C and 50% RH for a week is 10% by mass or more and 50% by mass or less: percentage increase of mass of cyclic amine compound (a1) [% by mass] = 100 × amount of increase of mass of cyclic amine compound (a1) (g) / (mass of cyclic amine compound (a1) (g) + amount of increase of mass of cyclic amine compound (a1) (g)).
[3] The blowing agent according to [1] or [2] above, wherein the cyclic amine compound (a1) has an amino group bonded to a primary carbon atom.
[4] The blowing agent according to any one of [1] to [3] above, wherein the cyclic structure of the cyclic amine compound (a1) comprises at least one selected from the group consisting of a five-membered ring and a six-membered ring.
[5] The blowing agent according to any one of [1] to [4] above, wherein the cyclic amine compound (a1) has 2 or more and 6 or less amino groups.
[6] The blowing agent according to any one of [1] to [5] above, wherein the cyclic amine compound (a1) comprises at least one selected from the group consisting of xylylenediamine and derivatives thereof, bis(aminomethyl)cyclohexane and derivatives thereof, limonenediamine and derivatives thereof, and isophoronediamine and derivatives thereof.
[7] The blowing agent according to any one of [1] to [6] above, wherein the water content in the reaction product (a2) is 50% by mass or less.
[8] The blowing agent according to any one of [1] to [7] above, wherein a molar ratio of a portion derived from the cyclic amine compound (a1) to a portion derived from carbon dioxide [cyclic amine compound (a1) / carbon dioxide] is 70/30 to 30/70.
[9] The blowing agent according to any one of [1] to [8] above, wherein a content of the repeating unit represented by the general formula (I) in the polyurea is 50% by mass or more.
[10] The blowing agent according to any one of [1] to [9] above, being produced by a method of contacting the cyclic amine compound (a1) with a gas having a carbon dioxide concentration of 0.01% by volume or more and 10% by volume or less to react the cyclic amine compound (a1) with carbon dioxide.
[11] A foamable resin composition for obtaining a polyurea resin foam, comprising:
   the blowing agent (A) according to any one of [1] to [10] above, and
   a polyisocyanate compound (B).
[12] The foamable resin composition according to [11] above, wherein the polyisocyanate compound (B) comprises a compound having 2 or more isocyanate groups.
[13] The foamable resin composition according to [11] or [12] above, wherein a content of a blowing agent other than the blowing agent (A) is 5% by mass or less.
[14] The foamable resin composition according to any one of [11] to [13] above, wherein the content of the blowing agent (A) in the foamable resin composition is such that the ratio of the number of amino groups in the blowing agent (A) to the number of isocyanate groups in the polyisocyanate compound (B) (number of amino groups / number of isocyanate groups) is 0.5 or more and 1.5 or less.
[15] The foamable resin composition according to any one of [11] to [14] above, wherein the polyisocyanate compound (B) is at least one selected from the group consisting of isophorone diisocyanate (IPDI), 1,6-hexamethylene diisocyanate (HDI), and 4,4'-diphenylmethane diisocyanate (MDI).
[12] A polyurea resin foam obtained by foam molding the foamable resin composition according to any one of [11] to [15] above.
[13] A method for producing a polyurea resin foam, comprising a step of foam molding the foamable resin composition according to any one of [11] to [15] above.

### Advantageous Effect of Invention

The present invention provides a novel method for producing a polyurea resin foam having improved formability, which can reduce environmental impacts, a blowing agent and a foamable resin composition used for the method, and a polyurea resin foam having improved foamability.

### Description of Embodiments

Embodiments of the present invention (hereinafter simply referred to as "the present embodiment") will be described in detail. The following present embodiments illustrate the present invention and do not limit the present invention. The present invention may be practiced with modification within the gist of the present invention. In the present embodiments, preferred specifications may be optionally employed and combination of preferred specifications are more preferred. In the present embodiments, the term "XX to YY" means "XX or more and YY or less."

### [Blowing agent (blowing agent (A))]

The blowing agent of the present invention (the blowing agent described in this section is the same as the blowing agent (A) contained in the foamable resin composition described later) is a blowing agent for obtaining a polyurea resin foam comprising a polyurea having a repeating unit represented by the following general formula (I), comprising a reaction product (a2) of a cyclic amine compound (a1) and carbon dioxide: 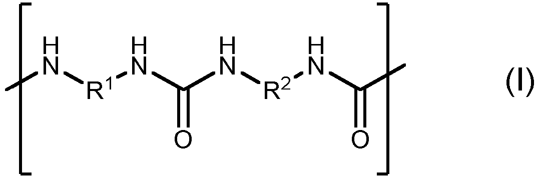 wherein R¹ is a divalent hydrocarbon group having a cyclic structure optionally having a substituent, and R² is a divalent hydrocarbon group optionally having a substituent.

According to the blowing agent of the present invention, a polyurea resin foam having improved foamability can be obtained while reducing environmental impacts by using a reaction product (a2) of a cyclic amine compound (a1) and carbon dioxide as a blowing agent for molding a polyurea resin foam.

According to the present invention, the blowing agent comprises a reaction product (a2) of a cyclic amine compound (a1) and carbon dioxide and a polyurea resin foam having improved foamability can be obtained. The reason is not clear, but is assumed to be as follows.

The cyclic amine compound (a1) has relatively high ability to retain carbon dioxide and has low water absorption property, and therefore, by heating a resin during molding of the resin, a cyclic amine compound and carbon dioxide are generated. It is assumed that at this stage, a sufficient amount of carbon dioxide contributes to foaming, so that a polyurea resin foam having improved foamability is obtained. In addition, since the cyclic amine compound (a1) has high ability to retain carbon dioxide, it can absorb carbon dioxide from the environment, and use of other blowing agents is also reduced, so that environmental impacts can be also reduced.

It is preferable that the cyclic amine compound (a1) has an amino group bonded to a primary carbon atom from the viewpoint of the improvement of the reactivity with carbon dioxide and foamability. Such an amino group is less likely to cause steric hindrance, and thus carbon dioxide is easily absorbed.

The cyclic amine compound (a1) is an amine compound having a cyclic structure. Examples of cyclic structures in the cyclic amine compound (a1) include an alicyclic hydrocarbon structure, an aromatic hydrocarbon structure, and a heterocyclic structure with a heteroatom in the ring. It is preferable that the cyclic amine compound (a1) has at least one structure selected from the group consisting of an alicyclic hydrocarbon structure and an aromatic hydrocarbon structure, and it is more preferable that the cyclic amine compound (a1) has an alicyclic hydrocarbon structure from the viewpoint of the improvement of the reactivity with carbon dioxide and foamability.

In this regard, the alicyclic hydrocarbon structure in the present embodiment refers to a non-aromatic, saturated or unsaturated cyclic structure consisting of carbon and hydrogen, excluding a heterocyclic structure having a heteroatom in the ring. The heterocyclic structure means a cyclic structure containing a heteroatom in atoms that constitute the ring.

When the cyclic amine compound (a1) may be any one of a cis-body, a trans-body and a mixture of a cis-body and a trans-body.

The cyclic structure of the cyclic amine compound (a1) preferably has at least one selected from the group consisting of a five-membered ring and a six-membered ring, and more preferably a six-membered ring from the viewpoint of the improvement of the reactivity with carbon dioxide and foamability.

It is preferable that the cyclic amine compound (a1) has a cyclic structure from the viewpoint of the improvement of the reactivity with carbon dioxide and foamability. More specifically, it is preferable that the cyclic amine compound (a1) is a monocyclic compound.

Examples of alicyclic hydrocarbon structures in the cyclic amine compound (a1) include a cyclopropane ring, a cyclobutane ring, a cyclopentane ring, a cyclohexane ring, a cycloheptane ring and a cyclooctane ring. Of the above ring structures, a cyclopentane ring and a cyclohexane ring are preferred, and a cyclohexane ring is more preferred, and a 1,3-substituted cyclohexane ring is more preferred.

The number of amino groups in the cyclic amine compound (a1) is preferably 2 or more, and is preferably 6 or less, more preferably 4 or less, even more preferably 3 or less, and even more preferably 2, from the viewpoint of the improvement of the reactivity with carbon dioxide, curability, and foamability.

An amino group having a nitrogen-hydrogen bond is preferred as the amino group, and at least one amino group selected from the group consisting of a primary amino group and a secondary amino group is more preferred, and a primary amino group is further preferred from the viewpoint of the improvement of the reactivity with carbon dioxide, curability and foamability.

The cyclic amine compound (a1) is preferably at least one selected from the group consisting of o-xylylenediamine and derivatives thereof, m-xylylenediamine and derivatives thereof, p-xylylenediamine and derivatives thereof, and a compound represented by the following formula (II):

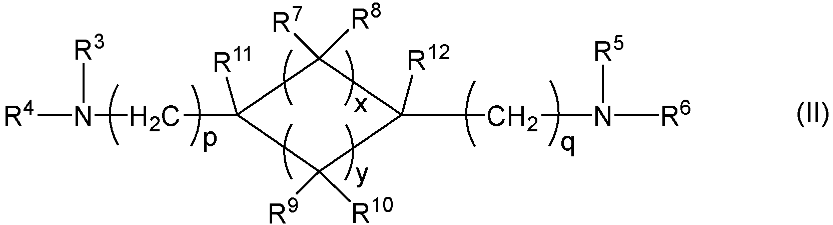

In the above formula (II), R³ to R⁶ each independently represent a hydrogen atom, or a hydrocarbon group having 1 or more and 10 or less carbon atoms and optionally having at least one substituent selected from the group consisting of an amino group, a cyano group, a phenyl group, a hydroxy group, and a carboxyl group; R⁷ to R¹² each independently represent a hydrogen atom or a hydrocarbon group having 1 or more and 4 or less carbon atoms; x and y each independently represent an integer of 0 or more and 6 or less, and x + y is 1 or more and 6 or less; and p and q are each independently an integer of 0 or more and 4 or less, and at least one of p and q is 1 or more.

R³ to R⁶ are each independently a hydrogen atom, or a hydrocarbon group having 1 or more and 10 or less carbon atoms and optionally having at least one substituent selected from the group consisting of an amino group, a cyano group, a phenyl group, a hydroxy group, and a carboxyl group; preferably a hydrogen atom, or a hydrocarbon group having 1 or more and 10 or less carbon atoms and optionally having at least one substituent selected from the group consisting of an amino group, a cyano group, and a phenyl group; more preferably a hydrogen atom, or an alkyl group having 1 or more and 4 or less carbon atoms and optionally having at least one substituent selected from the group consisting of an amino group, a cyano group, and a phenyl group; even more preferably a hydrogen atom, or an alkyl group having 1 or more and 4 or less carbon atoms and optionally having at least one substituent selected from the group consisting of an amino group and a cyano group; still more preferably a hydrogen atom, or an alkyl group having 2 or more and 4 or less carbon atoms and optionally having at least one substituent selected from the group consisting of an amino group and a cyano group; and still more preferably a hydrogen atom.

The number of carbon atoms in the hydrocarbon group of R³ to R⁶ is each independently 1 or more, preferably 2 or more. It is 10 or less, preferably 5 or less, more preferably 4 or less, and even more preferably 3 or less.

R⁷ to R¹² are each independently a hydrogen atom or a hydrocarbon group having 1 or more and 4 or less carbon atoms, preferably a hydrogen atom or an alkyl group having 1 or more and 4 or less carbon atoms, more preferably a hydrogen atom or an alkyl group having 1 or more and 3 or less carbon atoms, and even more preferably a hydrogen atom or a methyl group, and still more preferably a hydrogen atom.

The number of carbon atoms in the hydrocarbon group of R⁷ to R¹² is each independently 1 or more and 4 or less, preferably 1 or 2, and more preferably 1.

p and q are each independently 0 or more, and preferably 1 or more, and 4 or less, preferably 2 or less and more preferably 1. At least one of p and q is 1 or more.

x and y each independently represents an integer of 0 or more and 6 or less, respectively, and x + y is 1 or more and 6 or less. x + y is preferably 2 or more, more preferably 3 or more, and even more preferably 4 or more to increase the amount of carbon dioxide absorbed and to improve foamability. x + y is preferably 5 or less and more preferably 4 to increase the amount of carbon dioxide absorbed and to improve foamability. In other words, the alicyclic hydrocarbon structure is preferably a five-membered ring or a six-membered ring, and more preferably a six-membered ring. When x + y is 4, it is preferable that x is 1 and y is 3.

From the viewpoint of the improvement of the reactivity with carbon dioxide, curability, and foamability, the cyclic amine compound (a1) preferably comprises at least one selected from the group consisting of xylylenediamine and derivatives thereof, bis(aminomethyl)cyclohexane and derivatives thereof, limonenediamine and derivatives thereof, isophoronediamine and derivatives thereof, 2,5-bisaminomethylfuran and derivatives thereof, and 2,5-bis(aminomethyl)tetrahydrofuran and derivatives thereof; more preferably comprises at least one selected from the group consisting of xylylenediamine and derivatives thereof, bis(aminomethyl)cyclohexane and derivatives thereof, limonenediamine and derivatives thereof, and isophoronediamine and derivatives thereof; is even more preferably at least one selected from the group consisting of xylylenediamine and derivatives thereof, bis(aminomethyl)cyclohexane and derivatives thereof, and isophoronediamine and derivatives thereof; and still more preferably comprises at least one selected from the group consisting of xylylenediamine and derivatives thereof, and bis(aminomethyl)cyclohexane and derivatives thereof.

As the cyclic amine compound (a1), at least one selected from the group consisting of xylylenediamine and derivatives thereof, bis(aminomethyl)cyclohexane and derivatives thereof, limonenediamine and derivatives thereof, isophoronediamine and derivatives thereof, 2,5-bisaminomethylfuran and derivatives thereof, and 2,5-bis(aminomethyl)tetrahydrofuran and derivatives thereof is preferred from the viewpoint of the improvement of the reactivity with carbon dioxide, curability, and foamability. At least one selected from the group consisting of xylylenediamine and derivatives thereof, bis(aminomethyl)cyclohexane and derivatives thereof, limonenediamine and derivatives thereof, and isophoronediamine and derivatives thereof is more preferred. At least one selected from the group consisting of xylylenediamine and derivatives thereof, bis(aminomethyl)cyclohexane and derivatives thereof, and isophoronediamine and derivatives thereof is even more preferred. At least one selected from the group consisting of xylylenediamine and derivatives thereof, and bis(aminomethyl)cyclohexane and derivatives thereof is still more preferred.

As the xylylenediamine and derivatives thereof, at least one selected from the group consisting of o-xylylenediamine and derivatives thereof, m-xylylenediamine and derivatives thereof, and p-xylylenediamine and derivatives thereof can be mentioned; at least one selected from the group consisting of m-xylylenediamine and derivatives thereof and p-xylylenediamine and derivatives thereof is preferred; and m-xylylenediamine and derivatives thereof are more preferred.

As the bis(aminomethyl)cyclohexane and derivatives thereof, at least one selected from the group consisting of 1,3-bis(aminomethyl)cyclohexane and derivatives thereof, 1,4-bis(aminomethyl)cyclohexane and derivatives thereof, and trans-1,4-bis(aminomethyl)cyclohexane and derivatives thereof can be mentioned; and 1,3-bis(aminomethyl)cyclohexane and derivatives thereof are preferred.

Of these, as the cyclic amine compound (a1), at least one selected from the group consisting of m-xylylenediamine and derivatives thereof, and 1,3-bis(aminomethyl)cyclohexane and derivatives thereof is preferred; and 1,3-bis(aminomethyl)cyclohexane and derivatives thereof are even more preferred, from the viewpoint of the improvement of the reactivity with carbon dioxide and foamability.

In this regard, examples of derivatives of the above amines include a compound in which at least one of the hydrogen atoms in the amino group is substituted by a hydrocarbon group having 1 or more and 10 or less carbon atoms and optionally having at least one substituent selected from the group consisting of an amino group, a cyano group and a phenyl group, preferably alkyl group having 1 or more and 4 or less carbon atoms and optionally having at least one substituent selected from the group consisting of an amino group, cyano group and a phenyl group, more preferably an alkyl group having 1 or more and 4 or less carbon atoms and optionally having at least one substituent selected from the group consisting of an amino group and a cyano group, even more preferably an alkyl group having 2 or more and 4 or less carbon atoms and optionally having at least one substituent selected from the group consisting of an amino group and a cyano group.

Examples of derivatives of the above amines also include a compound in which at least some of the hydrogen atoms in the cyclic structure are substituted by a hydrocarbon group having 1 or more and 4 or less carbon atoms, preferably an alkyl group having 1 or more and 3 or less carbon atoms, more preferably a methyl group or an ethyl group, and even more preferably a methyl group.

As described above, the cyclic amine compound (a1) is preferably an amine (primary amine). In other words, the cyclic amine compound (a1) is preferably at least one selected from the group consisting of xylylenediamine and bis(aminomethyl)cyclohexane, from the viewpoint of the improvement of the reactivity with carbon dioxide and foamability.

The xylylenediamine is at least one selected from the group consisting of o-xylylenediamine, m-xylylenediamine, and p-xylylenediamine, preferably at least one selected from the group consisting of m-xylylenediamine and p-xylylenediamine, and even more preferably m-xylylenediamine.

The bis(aminomethyl)cyclohexane is at least one selected from the group consisting of 1,3-bis(aminomethyl)cyclohexane, 1,4-bis(aminomethyl)cyclohexane, and trans-1,4-bis(aminomethyl)cyclohexane, and preferably 1,3-bis(aminomethyl)cyclohexane.

Of these, the cyclic amine compound (a1) is preferably at least one selected from the group consisting of m-xylylenediamine and 1,3-bis(aminomethyl)cyclohexane, and even more preferably 1,3-bis(aminomethyl)cyclohexane, from the viewpoint of the improvement of the reactivity with carbon dioxide and foamability.

These cyclic amine compounds (a1) may be used alone or in combination of 2 or more.

The cyclic amine compound (a1) has a maximum carbon dioxide release temperature measured by the following method of preferably 200°C or less, more preferably 180°C or less, even more preferably 160°C or less, still more preferably 150°C or less, yet more preferably 140°C or less, yet more preferably 135°C or less, and yet even more preferably 130°C or less to improve carbon dioxide release performance and foamability. The lower limit of the above maximum carbon dioxide release temperature is not particularly limited, and for example 40°C or more.

### (Method)

The cyclic amine compound (a1) with carbon dioxide absorbed is heated at a heating rate of 10°C/ minute from 23°C to 250°C, and the temperature at which the amount of heat absorbed due to desorption of carbon dioxide reaches the maximum is measured, and the temperature is defined as the maximum carbon dioxide release temperature. In this regard the cyclic amine compound (a1) with carbon dioxide absorbed may be prepared by leaving 5 mmol of the cyclic amine compound (a1) to stand in air at 23°C and 50%RH for 24 hours.

The cyclic amine compound (a1) has an acid dissociation constant (pKa) of preferably 8.0 or more, more preferably 8.5 or more, and even more preferably 9.0 or more to increase the amount of carbon dioxide absorbed and improve foamability. The amine compound (a1) has an acid dissociation constant (pKa) of preferably 12.0 or less, more preferably 11.5 or less, and even more preferably 11.0 or less to improve the carbon dioxide release performance and improve foamability.

The acid dissociation constant of the cyclic amine compound (a1) is measured by the following measurement method based on acid-base titration.
(1) 0.2 g of the cyclic amine compound (a1) is dissolved in 30 mL of purified water.
(2) The acid dissociation constant (pKa) is calculated by titrating the solution prepared in (1) above with 0.1 N perchloric acid - acetic acid solution using an automatic potentiometric titrator (e.g., AT-610 made by Kyoto Electronics Manufacturing Co., Ltd.).

The temperature in the measurement is 25 ± 2°C.

The cyclic amine compound (a1) has a molecular weight of preferably 110 or more, more preferably 120 or more, and even more preferably 130 or more in order to suppress weight reduction in the heat treatment for releasing carbon dioxide. The molecular weight is preferably 250 or less, more preferably 200 or less, and even more preferably 180 or less to increase the amount of carbon dioxide absorbed and improve foamability.

The maximum endothermic temperature of the cyclic amine compound (a1) calculated by the following method is preferably 130°C or more, more preferably 140°C or more, and even more preferably 150°C or more in order to suppress weight reduction in the heat treatment for releasing carbon dioxide. The maximum endothermic temperature is preferably 260°C or less, more preferably 230°C or less, even more preferably 210°C or less, and still more preferably 190°C or less to increase the amount of carbon dioxide absorbed and improve foamability.

### (Method)

The cyclic amine compound (a1) is heated at a heating rate of 10°C/ minute from 23°C to 350°C and the temperature at which the amount of heat absorbed due to evaporation of the amine compound (a1) reaches the maximum is measured, and the temperature is defined as the maximum endothermic temperature of the amine compound (a1).

The cyclic amine compound (a1) has an amine value of preferably 400 mg KOH/ g or more, more preferably 500 mg KOH/ g or more, even more preferably 600 mg KOH/g or more, still more preferably 650 mg KOH/g or more, and yet more preferably 700 mg KOH/g or more to increase the amount of carbon dioxide absorbed and improve foamability. The amine value is preferably 1,500 mg KOH/g or less, more preferably 1,400 mg KOH/g or less, even more preferably 1,300 mg KOH/g or less, still more preferably 1,100 mg KOH/g or less, even more preferably 1,000 mg KOH/g or less, and yet more preferably 850 mg KOH/g or less. The amine value refers to the amount of amine in a compound, which is the number of milligrams of potassium hydroxide (KOH) equivalent to the amount of acid necessary for neutralizing 1 g of the compound.

The amine value may be measured by the following method according to JIS K7237-1995.
(1) 0.1 g of the cyclic amine compound (a1) is dissolved in 20 mL of acetic acid.
(2) The amine value is calculated by titrating the solution prepared in (1) above with 0.1 N perchloric acid - acetic acid solution using an automatic potentiometric titrator (e.g., AT-610 made by Kyoto Electronics Manufacturing Co., Ltd.).

The percentage increase of the mass of the cyclic amine compound (a1) calculated by the following equation after leaving the cyclic amine compound (a1) to stand in an air environment of 23°C and 50% RH for a week is preferably 10% by mass or more, more preferably 15% by mass or more, even more preferably 18% by mass or more, still more preferably 20% by mass or more and yet more preferably 23% by mass or more to improve foamability. It is preferably 50% by mass or less, more preferably 45% by mass or less, even more preferably 40% by mass or less, still more preferably 30% by mass or less and yet more preferably 28% by mass or less. Percentage increase of mass of cyclic amine compound (a1) [% by mass] = 100 × amount of increase of mass of cyclic amine compound (a1) (g) / (mass of cyclic amine compound (a1) (g) + amount of increase of mass of cyclic amine compound (a1) (g)).

The percentage increase of the mass of the cyclic amine compound (a1) may be specifically measured by the method described in Examples.

The blowing agent of the present invention may be obtained by, for example, contacting the cyclic amine compound (a1) with a gas containing carbon dioxide to react the cyclic amine compound (a1) with carbon dioxide. In other words, in a preferred method for producing a blowing agent of the present invention, the cyclic amine compound (a1) is contacted with a gas containing carbon dioxide to react the cyclic amine compound (a1) with carbon dioxide.

The gas containing carbon dioxide may be a simple substance of carbon dioxide, or may be a mixture of carbon dioxide and an inert gas. Use of air as the gas containing carbon dioxide is convenient and preferred. In this regard, the "inert gas" refers to a gas having no influence on the reaction for obtaining a polyurea resin foam described later.

The method preferably further includes a step of obtaining a reaction product (a2) by contacting the cyclic amine compound (a1) with a gas containing carbon dioxide and having a carbon dioxide concentration of 0.01% by volume or more and 10% by volume or less to react the cyclic amine compound (a1) with carbon dioxide. In other words, the blowing agent of the present invention is preferably a blowing agent produced by a method of contacting the cyclic amine compound (a1) with a gas having a carbon dioxide concentration of 0.01% by volume or more and 10% by volume or less to react the cyclic amine compound (a1) with carbon dioxide.

The carbon dioxide concentration is preferably 0.01% by volume or more, more preferably 0.02% by volume or more, even more preferably 0.03% by volume or more, and is preferably 10% by volume or less, more preferably 5% by volume or less, even more preferably 1% by volume or less, still more preferably 0.5% by volume or less, and still more preferably 0.1% by volume or less. The gas having a carbon dioxide concentration of 0.01% by volume or more and 10% by volume or less is even more preferably air.

The method of contacting the cyclic amine compound (a1) with a gas containing carbon dioxide is not restricted, but it is preferable to keep the cyclic amine compound (a1) in the gas containing carbon dioxide at 30°C or lower while stirring or shaking until the desired range of the percentage increase of mass is reached. The pressure when the cyclic amine compound (a1) is contacted with a gas containing carbon dioxide is not restricted, but the cyclic amine compound is preferably kept at atmospheric pressure or under pressure, and is more preferably kept at atmospheric pressure.

The time for the contact with a gas containing carbon dioxide may be adjusted depending on the above-mentioned temperature, pressure, and amount of carbon dioxide contained in the gas, but when air is used as the gas containing carbon dioxide and keeping is performed at atmospheric pressure, the time for the contact with the gas containing carbon dioxide is preferably 1 hour or more, more preferably 1 day or more, even more preferably 5 days or more, still more preferably 10 days or more, still more preferably 15 days or more, and still more preferably 30 days or more. The upper limit is not restricted, but the time is preferably 100 days or less.

The reaction product (a2) of the cyclic amine compound (a1) and carbon dioxide preferably includes at least one selected from the group consisting of carbamic acid, carbamate, carbonate, and hydrogen carbonate.

The blowing agent of the present invention forms a salt as described above because it is a reaction product (a2) of the cyclic amine compound (a1) and carbon dioxide, and a molar ratio of a portion derived from the cyclic amine compound (a1) to a portion derived from carbon dioxide contained in the blowing agent [amine compound (a1) / carbon dioxide] is preferably 70/30 to 30/70, more preferably 60/40 to 40/60, and even more preferably 55/45 to 45/55.

The water content in the reaction product (a2) is preferably 50% by mass or less, more preferably 15% by mass or less, even more preferably 10% by mass or less, and still more preferably 5% by mass or less. The water content in the above range can improve foamability.

The blowing agent of the present invention may be obtained by contacting the cyclic amine compound (a1) with a gas containing carbon dioxide, as described above, and in this stage, it is preferable not to add water.

The blowing agent of the present invention is a blowing agent for obtaining a polyurea resin foam comprising a polyurea having a repeating unit represented by the following general formula (I): 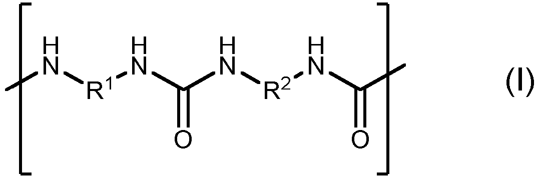 wherein R¹ is a divalent hydrocarbon group having a cyclic structure optionally having a substituent, and R² is a divalent hydrocarbon group optionally having a substituent.
R¹ is a divalent hydrocarbon group having a cyclic structure optionally having a substituent, and is a hydrocarbon group derived from the cyclic amine compound (a1). In other words, R¹ is a divalent group obtained by excluding 2 amino groups from the cyclic amine compound (a1) described above, and a preferred amine compound to form R¹ is also the same as the cyclic amine compound (a1) described above.
R¹ is preferably a hydrocarbon group having 6 to 20 carbon atoms, and is more preferably a hydrocarbon group having 8 to 10 carbon atoms. R¹ preferably consists only of carbon and hydrogen. Especially, R¹ is preferably at least one selected from the group consisting of a xylylene group and a cyclohexanediylbis(methylene) group.

The xylylene group is at least one selected from the group consisting of an o-xylylene group, a m-xylylene group, and a p-xylylene group, preferably at least one selected from the group consisting of a m-xylylene group and a p-xylylene group, and more preferably a m-xylylene group.

The cyclohexanediylbis(methylene) group is preferably a cyclohexane-1,3-diylbis(methylene) group.
R² is a divalent hydrocarbon group optionally having a substituent, and is a hydrocarbon group derived from a polyisocyanate compound (B). In other words, R² is a divalent group obtained by excluding 2 isocyanate groups from a polyisocyanate compound (B) described later, and a preferred polyisocyanate compound to form R² is also the same as the polyisocyanate compound (B) described later.
R² is preferably a hydrocarbon group having 6 to 20 carbon atoms, and is more preferably a hydrocarbon group having 6 to 13 carbon atoms. R² preferably consists only of carbon and hydrogen. Especially, R² is preferably at least one selected from the group consisting of a 1,6-hexamethylene group, a 4,4'-methylenediphenyl group, and a 3,3,5-trimethylcyclohexane-1,3-diyl(3-methylene) group.

Each of R¹ and R² may be composed of one divalent hydrocarbon group, or may include a plurality of divalent hydrocarbon groups.

The polyurea having a repeating unit represented by the general formula (I) may have a structure other than the repeating unit represented by the general formula (I), and may have a branched structure or a crosslinked structure. The content of the repeating unit represented by the general formula (I) in the polyurea is preferably 50% by mass or more, more preferably 60% by mass or more, even more preferably 70% by mass or more, even more preferably 80% by mass or more, even more preferably 90% by mass or more, even more preferably 95% by mass or more, even more preferably 98% by mass or more, even more preferably 99% by mass or more, and is preferably 100% by mass or less. The polyurea having a repeating unit represented by the general formula (I) may consist only of repeating units represented by the general formula (I).

The total of urea bonds and carbon atoms in the main chain of the polyurea having a repeating unit represented by the general formula (I), in terms of number of atoms, is preferably 50% or more, more preferably 60% or more, even more preferably 70% or more, even more preferably 80% or more, even more preferably 90% or more, even more preferably 95% or more, even more preferably 98% or more, even more preferably 99% or more, and is preferably 100% or less. The main chain of the polyurea having a repeating unit represented by the general formula (I) may consist only of urea bonds and carbon atoms.

### [Foamable resin composition]

The foamable resin composition of the present invention is a foamable resin composition for obtaining a polyurea resin foam, and is a foamable resin composition comprising the blowing agent (A) and a polyisocyanate compound (B). In other words, the foamable resin composition of the present invention is a foamable resin composition for obtaining a polyurea resin foam comprising a polyurea having a repeating unit represented by the formula (I), and is a foamable resin composition comprising a blowing agent (A) that comprises a reaction product (a2) of a cyclic amine compound (a1) and carbon dioxide, and a polyisocyanate compound (B).

The foamable resin composition of the present invention can provide a polyurea resin foam having improved foamability.

The blowing agent (A) contained in the foamable resin composition of the present invention is the same as the blowing agent described in the section [Blowing agent (blowing agent (A))].

In the foamable resin composition of the present invention, a blowing agent other than the blowing agent (A) may be contained, but it is preferable that the blowing agent should not be substantially contained. The content of the blowing agent other than the blowing agent (A) in the foamable resin composition is preferably 5% by mass or less, more preferably 3% by mass or less, even more preferably 1% by mass or less, still more preferably 0.5% by mass or less, still more preferably 0.1% by mass or less, still more preferably 0% by mass, and it is still more preferable that the blowing agent other than the blowing agent (A) should not be contained.

Examples of blowing agents other than the blowing agent (A) include a halogen-containing hydrocarbon such as chlorofluorocarbon and fluorocarbon; an alicyclic hydrocarbon such as cyclopentane; an organic blowing agent such as dinitropentamethylenetetramine, azodicarbonamide, p,p'-oxybisbenzenesulfonylhydrazide; and an inorganic blowing agent such as sodium hydrogen carbonate.

The content of the blowing agent (A) in the foamable resin composition is such that the ratio of the number of amino groups in the blowing agent (A) to the number of isocyanate groups in the polyisocyanate compound (B) (number of amino groups / number of isocyanate groups) is preferably 0.5 or more and 1.5 or less. From the viewpoint of the improvement of foamability, the ratio of the number of amino groups in the blowing agent (A) to the number of isocyanate groups in the polyisocyanate compound (B) (number of amino groups / number of isocyanate groups) is preferably 0.5 or more, more preferably 0.6 or more, even more preferably 0.7 or more, still more preferably 0.8 or more, and still more preferably 0.9 or more. From the same viewpoint, it is preferably 1.5 or less, more preferably 1.4 or less, even more preferably 1.3 or less, still more preferably 1.2 or less, and still more preferably 1.1 or less.

### <Polyisocyanate compound (B)>

The polyisocyanate compound (B) is not particularly limited as long as it includes a compound having 2 or more isocyanate groups, and conventionally known ones can be used. The polyisocyanate compound (A) is preferably a compound having 2 or more isocyanate groups.

Examples of diisocyanate compounds having 2 isocyanate groups include aliphatic isocyanate compounds, such as 1,6-hexamethylene diisocyanate (HDI), 2,2,4-trimethylhexamethylene diisocyanate, methylene diisocyanate, isopropylene diisocyanate, lysine diisocyanate, lysine diisocyanate methyl ester, and 1,5-octylene diisocyanate; alicyclic isocyanate compounds, such as 4,4'-dicyclohexylmethane diisocyanate, isophorone diisocyanate (IPDI), norbornene diisocyanate, hydrogenated tolylene diisocyanate, methylcyclohexane diisocyanate, isopropylidene bis(4-cyclohexylisocyanate), and dimer acid diisocyanate; and aromatic isocyanate compounds, such as 2,4- or 2,6-tolylene diisocyanate (TDI), 4,4'-diphenylmethane diisocyanate (MDI), 1,5-naphthylene diisocyanate, p- or m-xylylene diisocyanate (XDI), tolidine diisocyanate, p-phenylene diisocyanate, diphenyl ether diisocyanate, diphenylsulfone diisocyanate, dianisidine diisocyanate, and tetramethyl-m-xylylene diisocyanate.

Examples of isocyanate compounds having 3 or more isocyanate groups include triphenylmethane triisocyanate, triisocyanatophenyl thiophosphate, polymethylene polyphenylene polyisocyanate (polymeric MDI), an isocyanurate modified compound that is a trimer of HDI or TDI, and a biuret modified compound.

The isocyanate compound (B) may be used alone or in combination of 2 or more.

Of these, as the polyisocyanate compound (B), diisocyanate having 2 isocyanate groups is preferred; isophorone diisocyanate (IPDI), 1,6-hexamethylene diisocyanate (HDI), or 4,4'-diphenylmethane diisocyanate (MDI) is more preferred; isophorone diisocyanate (IPDI) or 1,6-hexamethylene diisocyanate (HDI) is even more preferred; and isophorone diisocyanate (IPDI) is still more preferred. In other words, the polyisocyanate compound (B) is more preferably at least one selected from the group consisting of isophorone diisocyanate (IPDI), 1,6-hexamethyelne diisocyanate (HDI), and 4,4'-diphenylmethane diisocyanate (MDI); even more preferably at least one selected from the group consisting of isophorone diisocyanate (IPDI) and 1,6-hexamethylene diisocyanate (HDI); and still more preferably isophorone diisocyanate (IPDI).

The foamable resin composition may also include other components such as a modifying component including a filler and a plasticizer, a flow modifying component such as a thixotropic agent, a pigment, a leveling agent, a tackifier, elastomer fine particles, a curing accelerator, an antifoaming agent and a chemical blowing agent, depending on applications.

The foamable resin composition may contain a solvent, but it is preferable that the foamable resin composition should not substantially contain a solvent. Containing no solvent can achieve high environmental friendliness, and can conveniently provide a foam.

However, from the viewpoint of effectively achieving the effects of the present invention, the total content of the blowing agent (A) and the polyisocyanate compound (B) in the foamable resin composition when the total solid content in the foamable resin composition of the present invention is 100% by mass is preferably 50% by mass or more, more preferably 60% by mass or more, even more preferably 70% by mass or more, even more preferably 80% by mass or more, even more preferably 90% by mass or more, even more preferably 95% by mass or more, even more preferably 98% by mass or more, and even more preferably 99% by mass or more, and from the same viewpoint, it is preferably 100% by mass or less.

### <Method for preparing foamable resin composition>

The method for preparing the foamable resin composition is not particularly limited. The foamable resin composition may be produced by mixing the blowing agent (A), the polyisocyanate compound (B), and if necessary, other components by a known method using a known apparatus.

### [Polyurea resin foam and method for producing polyurea resin foam]

The polyurea resin foam of the present invention is obtained by foam molding the foamable resin composition of the present invention described above. Therefore, the polyurea resin foam of the present invention contains a polyurea having a repeating unit represented by the general formula (I). The polyurea having a repeating unit represented by the general formula (I), which is contained in the polyurea resin foam of the present invention, is the same as that described in the section [Blowing agent (blowing agent (A))], and the preferred range is also the same.

The method is not restricted as long as the polyurea resin foam of the present invention is obtained by foam molding the foamable resin composition, but a preferred method for producing a polyurea resin foam includes a step of foam molding the foamable resin composition.

In the step of foaming the foamable resin composition, for example, an amine compound (a1) and carbon dioxide are generated from the reaction product (a2) (blowing agent (A)) by heating the foamable resin composition, and carbon dioxide causes the foamable resin composition to foam, and the foamable resin composition is cured by the reaction between the resulting amine compound (a1) and polyisocyanate compound (B). Such a method provides a polyurea resin foam.

The temperature and the time of hating in the step of foaming the foamable resin composition may be optionally selected, and the temperature is preferably 50 to 250°C, more preferably 100 to 200°C, and even more preferably 120 to 180°C, from the viewpoint of the reaction speed, productivity, and prevention of decomposition of raw material. The reaction time is preferably 10 minutes to 12 hours, and more preferably 15 minutes to 4 hours.

The pressure in the step of foaming the foamable resin composition may be optionally selected, but foaming is preferably conducted at atmospheric pressure.

It is preferable that the method for producing a polyurea resin foam of the present invention further includes a step of obtaining a reaction product (a2) by contacting the amine compound (a1) with a gas containing carbon dioxide to react the amine compound (a1) with carbon dioxide, before the step of foaming the foamable resin composition.

The gas containing carbon dioxide may be a simple substance of carbon dioxide, or may be a mixture of carbon dioxide and an inert gas. Use of air as the gas containing carbon dioxide is convenient and preferred. In this regard, the "inert gas" refers to a gas having no influence on the reaction for obtaining a polyurea resin foam described later.

The above method preferably further includes a step of obtaining a reaction product (a2) by contacting the amine compound (a1) with a gas containing carbon dioxide and having a carbon dioxide concentration of 0.01% by volume or more and 10% by volume or less to react the amine compound (a1) with carbon dioxide.

The carbon dioxide concentration is preferably 0.01% by volume or more, more preferably 0.02% by volume or more, even more preferably 0.03% by volume or more, and is preferably 10% by volume or less, more preferably 5% by volume or less, even more preferably 1% by volume or less, still more preferably 0.5% by volume or less, and still more preferably 0.1% by volume or less. The gas having a carbon dioxide concentration of 0.01% by volume or more and 10% by volume or less is even more preferably air.

The method of contacting the amine compound (a1) with a gas containing carbon dioxide is not restricted, but it is preferable to keep the amine compound (a1) in a gas containing carbon dioxide at 30°C or lower while stirring or shaking until the desired range of the percentage increase of mass is reached. The pressure when the amine compound (a1) is contacted with a gas containing carbon dioxide is not restricted, but the amine compound is preferably kept at atmospheric pressure or under pressure, and is more preferably kept at atmospheric pressure.

The reaction product (a2) of the amine compound (a1) and carbon dioxide preferably includes at least one selected from the group consisting of carbamic acid, carbamate, carbonate, and hydrogen carbonate.

### Examples

Hereinafter the present invention will be described with reference to Examples, but the present invention is not limited to Examples. In the present Examples, the respective properties were measured by the following methods.

### (Acid dissociation constant (pKa) of amine compound)

The acid dissociation constant of the amine compound was measured by the following measurement method.
(1) 0.2 g of the amine compound was dissolved in 30 mL of purified water.
(2) The acid dissociation constant (pKa) was calculated by titrating the solution prepared in (1) above with 0.1 N perchloric acid - acetic acid solution using an automatic potentiometric titrator (AT-610 made by Kyoto Electronics Manufacturing Co., Ltd.).

The temperature in the measurement was 25 ± 2°C.

### (Amine value of amine compound)

The amine value was measured by the following measurement method according to JIS K7237-1995.
(1) 0.1 g of the amine compound was dissolved in 20 mL of acetic acid.
(2) The amine value was calculated by titrating the solution prepared in (1) above with 0.1 N perchloric acid - acetic acid solution using an automatic potentiometric titrator (AT-610 made by Kyoto Electronics Manufacturing Co., Ltd.)

With regard to ethylenediamine, calculated values are shown in Table 1 because measurement under the above measurement conditions was not able to be conducted.

### (Maximum endothermic temperature of amine compound)

The maximum endothermic temperature of the amine compound was measured by subjecting the amine compound to DTA as described below. First, differential scanning calorimetry of the amine compound was performed under conditions of a temperature range of 23 to 350°C, a heating rate of 10°C/minute and a nitrogen atmosphere using a differential thermogravimeter (product name DTG-60 made by Shimadzu Corporation). The temperature at which the amount of heat absorbed due to the evaporation of the amine compound was the maximum was calculated from the DTA curve obtained, and the temperature was determined as the maximum endothermic temperature of the amine compound.

### (Maximum carbon dioxide (CO₂) release temperature of amine compound)

A carbon dioxide detector and a Petri dish were placed in an openable desiccator (inner dimension: 370 mm × 260 mm × 272 mm). Subsequently, the amine compound (5 mmol) was added to the Petri dish in the desiccator and the door was immediately closed to leave the amine compound to stand in the desiccator in an air environment at 23°C and 50% RH for 24 hours. The initial concentration of carbon dioxide was adjusted to about 400 ppm.

Then the amine compound was taken out of the desiccator to give an amine compound with carbon dioxide absorbed. The maximum carbon dioxide release temperature of the amine compound with carbon dioxide absorbed was measured by subjecting the amine compound to DSC as described below. First, differential scanning calorimetry of the amine compound was performed under conditions of a temperature range of 23 to 250°C, a heating rate of 10°C/minute and a nitrogen atmosphere using a differential thermogravimeter (product name DTG-60 made by Shimadzu Corporation). The temperature at which the amount of heat absorbed due to the desorption of carbon dioxide was the maximum was calculated from the DSC curve obtained, and the temperature was determined as the maximum carbon dioxide release temperature of the amine compound.

### (Maximum carbon dioxide (CO₂) release temperature of amine compound)

A carbon dioxide detector and a Petri dish were placed in an openable desiccator (inner dimension: 370 mm × 260 mm × 272 mm). Subsequently the amine compound (5 mmol) was added to the Petri dish in the desiccator and the door was immediately closed to leave the amine compound to stand in the desiccator in an air environment at 23°C and 50%RH for 24 hours. The initial concentration of carbon dioxide was adjusted to about 400 ppm.

Then the amine compound was taken out of the desiccator to give an amine compound with carbon dioxide absorbed. The maximum carbon dioxide release temperature of the amine compound with carbon dioxide absorbed was measured by subjecting the amine compound to DSC as described below. First, differential scanning calorimetry of the amine compound was performed under conditions of a temperature range of 23 to 250°C, a heating rate of 10°C/ minute and a nitrogen atmosphere using a differential thermogravimeter (product name DTG-60 made by Shimadzu Corporation). The temperature at which the amount of heat absorbed due to the desorption of carbon dioxide was the maximum was calculated from the DSC curve obtained, and the temperature was determined as the maximum carbon dioxide release temperature of the amine compound.

### (Water content in blowing agent and composition of blowing agent)

The water content in the blowing agent produced in each of Examples and Comparative Examples and the composition of the blowing agent were measured using an organic elemental microanalyzer (Micro Corder JM10 made by J-Science Lab Co., Ltd. (Examples 1 and 2, and Comparative Example 2) or a Yanaco CHN Corder MT-5 made by Yanaco Technical Science Corp. (Examples 3 and 4, and Comparative Examples 1, 3 and 4)).

### (Evaluation of foamability)

The foamability of the foamable resin composition was evaluated based on the volume increase ratio (times, foaming ratio) of the polyurea resin foam. The volume increase ratio is a value obtained by dividing the thickness of the foam after foaming by the thickness thereof before foaming when foaming is performed in a rectangular parallelepiped container whose bottom face shape (area of the base) is fixed. A higher volume increase ratio suggests excellent foamability.

The following amine compounds and the polyisocyanate compounds were used in Examples.

### (Amine compound)

MXDA: metaxylylenediamine (made by Mitsubishi Gas Chemical Company, Inc.)
1,3-BAC: 1,3-bis(aminomethyl)cyclohexane (made by Mitsubishi Gas Chemical Company, Inc.)
Ethylenediamine: ethylenediamine (made by Tokyo Chemical Industry Co., Ltd.)

### (Polyisocyanate compound)

IPDI: isophorone diisocyanate (made by Tokyo Chemical Industry Co., Ltd.)
MDI: 4,4'-diphenylmethane diisocyanate (made by Tokyo Chemical Industry Co., Ltd.)
HDI: 1,6-hexamethylene diisocyanate (made by Tokyo Chemical Industry Co., Ltd.)

### Example 1

### (1) Production of blowing agent (absorption of carbon dioxide into amine compound)

An amine compound, 1,3-BAC, was put in a container and left to stand in an air environment at 23°C and 50% RH for a week. By doing so 1,3-BAC and carbon dioxide in the air were reacted to give a blowing agent (carbonate of 1,3-BAC). At that stage, to suppress uneven reaction, the container in which the amine compound was placed was shaken as necessary so as not to leave unreacted 1,3-BAC.

Next, the amount of increase of the mass of 1,3-BAC was measured and the percentage increase of the mass of the amine compound was calculated by the following equation. Percentage increase of mass of amine compound [% by mass] = 100 × amount of increase of mass of amine compound (g) / (initial mass of amine compound (g) + amount of increase of mass of amine compound (g))

### (2) Production of foamable resin composition

To the blowing agent (carbonate of 1,3-BAC), the polyisocyanate compound, IPDI, was added, and they were mixed with stirring for 2 minutes to give a foamable resin composition. The amounts of the blowing agent and IPDI were determined so that the molar ratio of the number of amino groups in 1,3-BAC for constituting the blowing agent / the number of isocyanate groups in IPDI was 1/1.

### (3) Production of polyurea resin foam

The foamable resin composition obtained in (2) was put in a rectangular parallelepiped mold having a bottom face of 12 cm × 12 cm so that the foamable resin composition in the mold had a thickness of about 3 mm, and heated under conditions of a heating temperature of 150°C and a heating time of 30 minutes using a hot air dryer to cure and foam the foamable resin composition. A polyurea resin foam was thus obtained. Visual observation confirmed that a foam structure was formed in the resulting polyurea resin foam. Furthermore, the resulting polyurea resin foam was evaluated for the foamability. The results obtained are shown in Table 1.

### Examples 2 to 3 and Comparative Examples 1 to 2

The respective polyurea resin foams were obtained in the same manner as in Example 1 except for changing the types of the amine compound and the polyisocyanate compound to compounds shown in Table 1.

Visual observation confirmed that a foam structure was formed in the resulting polyurea resin foam. Furthermore, the resulting polyurea resin foam was evaluated for the foamability. The results obtained are shown in Table 1.

**Table 1**

| | Amine compound | | | | | Blowing agent | | | Composition | |
|---|---|---|---|---|---|---|---|---|---|---|
| | Name | Maximum CO₂ release temperature [°C] | Maximum endothermic temperature [°C] | Amine value [mgKOH/g] | pKa | Percentage increase of mass [% by mass] | Composition ratio (amine/CO2) | Water content [% by mass] | Polyisocyanate compound | Foaming ratio [times] |
| Example 1 | 1,3-BAC | 125.7 | 160.9 | 789 | 10.8 | 25.9 | 4/3 | 13 | IPDI | 3.0 |
| Example 2 | MXDA | 135.5 | 183.5 | 824 | 9.5 | 24.1 | 1/1 | 0 | IPDI | 5.0 |
| Comparative Example 1 | Ethylenediamine | 103.4 | 126.7 | 1867 (calculated value) | 9.8 | 44.3 | 2/1 | 47 | IPDI | 2.8 |
| Example 3 | 1,3-BAC | 125.7 | 160.9 | 789 | 10.8 | 25.9 | 4/3 | 13 | MDI | 3.1 |
| Comparative Example 2 | Ethylenediamine | 103.4 | 126.7 | 1867 (calculated value) | 9.8 | 44.3 | 2/1 | 47 | MDI | 1.8 |

### (Studies of time for absorption of carbon dioxide into amine compound)

### Examples 4 to 5

The respective polyurea resin foams were obtained in the same manner as in Example 1 except for changing the types of the amine compound and the polyisocyanate compound to compounds shown in Table 2.

Visual observation confirmed that a foam structure was formed in the resulting polyurea resin foam. Furthermore, the resulting polyurea resin foam was evaluated for the foamability. The results obtained are shown in Table 2.

### Examples 6 to 7

The respective polyurea resin foams were obtained in the same manner as in Examples 4 and 5 except that the standing time in (1) Production of blowing agent (absorption of carbon dioxide into amine compound) was changed to 10 weeks from 1 week.

Visual observation confirmed that a foam structure was formed in the resulting polyurea resin foam. Furthermore, the resulting polyurea resin foam was evaluated for the foamability. The results obtained are shown in Table 2.

From the results of Examples 4 to 7, it can be seen that the foamability is improved by taking enough time to contact the amine compound with air (carbon dioxide absorption time).

**Table 2**

| | Amine compound | | Blowing agent | | | Composition | |
|---|---|---|---|---|---|---|---|
| | Name | CO₂ absorption time (week(s)) | Percentage increase of mass [% by mass] | Composition ratio (amine/CO2) | Water content [% by mass] | Polyisocyanate compound | Foaming ratio [times] |
| Example 4 | 1,3-BAC | 1 | 25.9 | 4/3 | 13 | HDI | 2.5 |
| Example 6 | 1,3-BAC | 10 | 22.5 | 4/3 | 9 | HDI | 4.8 |
| Example 5 | MXDA | 1 | 24.1 | 1/1 | 0 | HDI | 2.5 |
| Example 7 | MXDA | 10 | 24.1 | 1/1 | 0 | HDI | 3.6 |

Table 1 shows that a polyurea resin foam having improved foamability can be produced by using the blowing agents and the foamable resin compositions of Examples without using a conventional environmentally harmful blowing agent. Furthermore, the blowing agents and the foamable resin compositions of Examples contribute to reduction of environmental impacts also because they can be produced while absorbing carbon dioxide from the environment.

## Claims

1. A blowing agent for obtaining a polyurea resin foam comprising a polyurea having a repeating unit represented by the following general formula (I), comprising:
a reaction product (a2) of a cyclic amine compound (a1) and carbon dioxide: 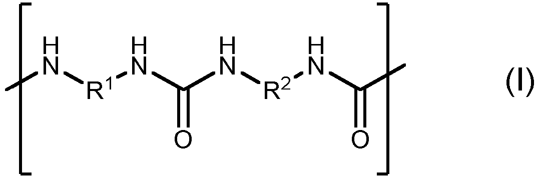 wherein R¹ is a divalent hydrocarbon group having a cyclic structure optionally having a substituent, and R² is a divalent hydrocarbon group optionally having a substituent.

2. The blowing agent according to claim 1, wherein a percentage increase of a mass of the cyclic amine compound (a1) calculated by the following equation when the cyclic amine compound (a1) is left to stand in an air environment of 23°C and 50% RH for a week is 10% by mass or more and 50% by mass or less: percentage increase of mass of cyclic amine compound (a1) [% by mass] = 100 × amount of increase of mass of cyclic amine compound (a1) (g) / (mass of cyclic amine compound (a1) (g) + amount of increase of mass of cyclic amine compound (a1) (g)).

3. The blowing agent according to claim 1 or 2, wherein the cyclic amine compound (a1) has an amino group bonded to a primary carbon atom.

4. The blowing agent according to any one of claims 1 to 3, wherein the cyclic structure of the cyclic amine compound (a1) comprises at least one selected from the group consisting of a five-membered ring and a six-membered ring.

5. The blowing agent according to any one of claims 1 to 4, wherein the cyclic amine compound (a1) has 2 or more and 6 or less amino groups.

6. The blowing agent according to any one of claims 1 to 5, wherein the cyclic amine compound (a1) comprises at least one selected from the group consisting of xylylenediamine and derivatives thereof, bis(aminomethyl)cyclohexane and derivatives thereof, limonenediamine and derivatives thereof, and isophoronediamine and derivatives thereof.

7. The blowing agent according to any one of claims 1 to 6, wherein the water content in the reaction product (a2) is 50% by mass or less.

8. The blowing agent according to any one of claims 1 to 7, wherein a molar ratio of a portion derived from the cyclic amine compound (a1) to a portion derived from carbon dioxide [cyclic amine compound (a1) / carbon dioxide] is 70/30 to 30/70.

9. The blowing agent according to any one of claims 1 to 8, wherein a content of the repeating unit represented by the general formula (I) in the polyurea is 50% by mass or more.

10. The blowing agent according to any one of claims 1 to 9, being produced by a method of contacting the cyclic amine compound (a1) with a gas having a carbon dioxide concentration of 0.01% by volume or more and 10% by volume or less to react the cyclic amine compound (a1) with carbon dioxide.

11. A foamable resin composition for obtaining a polyurea resin foam, comprising:
the blowing agent (A) according to any one of claims 1 to 10, and
a polyisocyanate compound (B).

12. The foamable resin composition according to claim 11, wherein the polyisocyanate compound (B) comprises a compound having 2 or more isocyanate groups.

13. The foamable resin composition according to claim 11 or 12, wherein a content of a blowing agent other than the blowing agent (A) is 5% by mass or less.

14. The foamable resin composition according to any one of claims 11 to 13, wherein the content of the blowing agent (A) in the foamable resin composition is such that the ratio of the number of amino groups in the blowing agent (A) to the number of isocyanate groups in the polyisocyanate compound (B) (number of amino groups / number of isocyanate groups) is 0.5 or more and 1.5 or less.

15. The foamable resin composition according to any one of claims 11 to 14, wherein the polyisocyanate compound (B) is at least one selected from the group consisting of isophorone diisocyanate (IPDI), 1,6-hexamethylene diisocyanate (HDI), and 4,4'-diphenylmethane diisocyanate (MDI).

16. A polyurea resin foam obtained by foam molding the foamable resin composition according to any one of claims 11 to 15.

17. A method for producing a polyurea resin foam, comprising a step of foam molding the foamable resin composition according to any one of claims 11 to 15.
